# EUROPÄISCHE PATENTANMELDUNG

(11) **EP 2 857 889 A2**
(43) Veröffentlichungstag der Anmeldung: **08.04.2015**
(21) Anmeldenummer: 14003123.8
(22) Anmeldetag: 10.09.2014
(51) Int. Cl.: G02C 5/14, G02C 5/22, G02C 1/06

(54) **Brillenbügelscharnier**

(30) Priorität: 12.09.2013 DE 102013110075
(71) Anmelder: Temming Holding GmbH, 33334 Gütersloh (DE)
(72) Erfinder: Temming, Markus, 33334 Gütersloh (DE)
(74) Vertreter: Rolf, Gudrun

(57) **Zusammenfassung**

Es wird ein Brillenbügelscharnier mit einem ortsfesten Backenteil (24) eines Brillengestells (2) und einem um eine ortsfeste Schwenkachse (3) des Backenteils verschwenkbaren Bügelvorderteil (4;5) eines Brillenbügels (6;7), von denen eines der beiden Teile (24;4;5) das andere Teil (4;5;24) mindestens teilweise umgreift, zur Verfügung gestellt, welches bei gegenseitigem Umschließen des einen Brillenbauteils vom anderen Brillenbauteil sehr widerstandskräftig ausgebildet ist, eine einfache Montage ermöglicht und dabei eine einfache und kostengünstige Konstruktion aufweist, was dadurch erzielt wird, dass das Backenteil (24) ein Drahtende ausweist, mit einem ersten, über einer ersten Funktionsfläche (13;14) des Bügelvorderteils (4;5) verlaufenden Abschnitt (9) und einem zweiten, über einer zweiten, der ersten Funktionsfläche (13;14) gegenüberliegenden zweiten Funktionsfläche (15;16) des Bügelvorderteils (4;5) verlaufenden Abschnitt (10), sowie ein dagegen abgewinkeltes Endstück (11), welches die Schwenkachse (3) bildet, die in das Bügelvorderteil (4;5) eingreift, welches in einem Zwischenraum zwischen erstem und zweiten Abschnitt (9;10) formschlüssig verschwenkbar gehalten ist.

## Beschreibung

Die Erfindung betrifft ein Brillenbügelscharnier mit einem ortsfesten Backenteil eines Brillengestells und einem um eine ortsfeste Schwenkachse des Backenteils verschwenkbaren Bügelvorderteil eines Brillenbügels, wobei eines der beiden Teile das andere Teil mindestens teilweise umgreift.

Es ist ein Scharniergelenk für einen Brillenbügel einer Brille bekannt, DE 20 2012 003 107 U1, welche eine backenseitige Scharnierhülse aufweist, in die bügelseitige Scharnierachsstifte beidseitig durch Aufspreizen und Zurückfedern der Bügelschenkel eingespannt werden.

Nachteilig an diesem vorbekannten Scharniergelenkt ist, dass die erforderliche Aufspreizbarkeit des Bügelvorderteils des Brillenbügels zu einer instabilen Scharnierkonstruktion führt, welche sie schon bei geringer Kraftbeeinflussung auflösen kann, was zu einer Zerstörung des Brillengestells führt.

Aufgabe der Erfindung ist es, ein Brillenbügelscharnier zur Verfügung zu stellen, welches bei gegenseitigem Umschließen des einen Brillenbauteils vom anderen Brillenbauteil erheblich widerstandskräftiger ausgebildet ist, eine einfache Montage ermöglicht und dabei eine einfache und kostengünstige Konstruktion aufweist.

Die Lösung dieser Aufgabe ergibt sich in Verbindung mit den Merkmalen des Oberbegriffes aus den technischen Merkmalen des kennzeichnenden Teils des ersten Hauptanspruches insbesondere dadurch, dass das Backenteil ein Drahtende aufweist, mit einem ersten, über einer ersten Funktionsfläche des Bügelvorderteils verlaufenden Abschnitt und einem zweiten, über einer zweiten, der ersten Funktionsfläche gegenüberliegenden Funktionsfläche des Bügelvorderteils verlaufenden Abschnitt, sowie mit einem dagegen abgewinkelten Endstück, welches die Schwenkachse bildet, die in eine Ausnehmung im Bügelvorderteil eingreift, welches in einem Zwischenraum zwischen ersten und zweiten Abschnitt beweglich und formschlüssig darin gehalten ist.

Im Gegensatz zum bekannten Scharniergelenk für einen Brillenbügel einer Brille sind hier also die Bauteile des Scharniers vertauscht, wobei das Drahtende das Bügelvorderteil zwischen zwei sich gegenüberliegenden Funktionsflächen klemmt und die beiden klemmenden Abschnitte des Drahtbügels über ein gemeinsames Verbindungsstück miteinander verbunden sind, so dass hier kein Aufspreizen von Scharnierachsstiften erfolgen kann. Dadurch, dass das abgewinkelte Endstück des Drahtendes rechtwinklig abgebogen ist und so die Schwenkachse für das Bügelvorderteil bildet, wird ein sehr robustes Brillenbügelscharnier zur Verfügung gestellt, welches ohne bewussten Krafteinsatz und die Verwendung von Werkzeugen nicht auseinander genommen werden kann. Wenn jedoch das Zerlegen des Brillenbügelscharniers gewünscht ist, kann dies aufgrund der Elastizität des Drahtendes einfach und zerstörungsfrei erfolgen, so dass die einzelnen Bauteile anschließend auch wieder- oder weiterverwandt werden können.

Weitere vorteilhafte Ausgestaltungen des Gegenstandes der Erfindung ergeben sich mit und in Kombination aus den nachfolgenden Unteransprüchen.

Gemäß einer besonders bevorzugten Ausführungsform der Erfindung sind der erste Abschnitt und der zweite Abschnitt des Drahtendes durch einen Verbindungsabschnitt miteinander verbunden, wobei der erste und der zweite Abschnitt des Drahtendes vor Montage des Bügelvorderteils einen geringfügig kleineren Zwischenraum bilden als nach der Montage und dass das Bügelvorderteil zwischen seiner ersten und zweiten Funktionsfläche durch elastische Kräfte des Drahtendes geklemmt ist. Hierdurch wird zum einen ein spielfreier Sitz des Bügelvorderteils in der von dem Drahtende gebildeten Umschlingung erzeugt und zum anderen eine minimale Reibung zur Verfügung gestellt, die bewirkt, dass ein Brillenbügel in jeder gewünschten Position verbleibt, sei es in einer Betriebsposition in aufgeschwenktem Zustand oder in einer Ruheposition, in einem parallel zum Brillengestellt eingeschwenkten Zustand.

Entsprechend einer besonders vorteilhaften Ausgestaltung der Erfindung ist das Bügelvorderteil etwa quaderförmig ausgebildet, wobei ein Teil seiner Oberseite die erste Funktionsfläche und ein Teil seiner Unterseite die zweite Funktionsfläche bildet und das Drahtende von vorne nach hinten über die erste Funktionsfläche verläuft, hinter dem Bügelvorderteil nach unten und unter dem Bügelvorderteil wieder nach vorne zurück abgewinkelt verläuft und noch im Bereich der zweiten Funktionsfläche mit seinem Endstück rechtwinklig nach oben umgebogen ist, dort in die Ausnehmung eingreift und so die Schwenkachse des Brillenbügelscharniers erzeugt.

Um einen sicheren Sitz des Endstückes bzw. der Schwenkachse in der Ausnehmung im Bügelvorderteil zu gewährleisten, kann das Endstück in eine Buchse eingesetzt sein, die dauerhaft einen spielfreien und geräuschlosen Sitz des Endstückes im Bügelvorderteil gewährleistet.

Der obere und der untere Abschnitt des Drahtendes liegen dabei nicht parallel übereinander, sondern sind in einer Ansicht von oben leicht um einen spitzen Winkel durch die Mittelachse des Verbindungsstückes gegeneinander verschwenkt, wodurch sich der Montageaufwand vereinfacht und das Bügelvorderteil vorteilhaft mit weiteren Funktionen, wie der nachfolgend beschriebenen Fadenhalterung ausgestattet werden kann.

Das Bügelvorderteil kann bevorzugt aus einem separaten Block, insbesondere aus Metall gefertigt sein, an dem ein Brillenbügeldraht starr angeordnet ist, wobei dies über ein winklig abgebogenes Ende des Brillenbügeldrahtes erfolgen kann, der in einer Ausnehmung in dem separaten Block kraft- und/ oder formschlüssig, gegebenenfalls auch stoffschlüssig darin festgelegt sein kann.

Entsprechend einer anderen vorteilhaften Ausführungsform der Erfindung ist das Bügelvorderteil einteilig mit dem Brillenbügel ausgebildet, der hierzu dann optimalerweise aus Kunststoff gefertigt sein kann, wobei beide Varianten der Brillenbügelvorderteile so ausgebildet sind, dass das Verbindungsstück des Drahtendes stets eine Anschlagfläche als Bewegungsbegrenzung des Brillenbügels zur Verfügung stellt, an die entweder ein Teilbereich des Brillenbügeldrahtes oder ein Teil des aus massiven Kunststoff bestehenden Brillenbügels anschlägt.

Gemäß einer anderen vorteilhaften Ausgestaltung des erfinderischen Brillenbügelscharniers sind die Scharnierbauteile in ihrer Funktion umgekehrt, sodass das Drahtende des vormals ortsfesten Backenteils dann als Brillenbügelvorderteil und ein vormals als Brillenbügelvorderteil dienendes Bauteil dann als ortsfestes Backenteil ausgebildet ist. Hierdurch vervielfältigt sich die mögliche Variantenanzahl und vergrößert sich der Gestaltungsspielraum eines Brillendesigners ganz erheblich.

Entsprechend einer weiteren bevorzugten erfinderischen Ausgestaltung der Erfindung ist in dem Bügelvorderteil koaxial zur Drehachse der Schwenkachse gegenüber dem abgewinkelten Endstück des Drahtendes eine Eintrittsöffnung für einen Nylonfaden einer Glashalterung angeordnet und der erste Abschnitt des Drahtendes seitlich außen neben der Schwenkachse verlaufend angeordnet, so dass die Eintrittsöffnung nach oben offen frei liegt.

In diese Eintrittsöffnung ist vorteilhafterweise ein Nylonfaden eingeführt, der hinter der Eintrittsöffnung in einem Freiraum der Ausnehmung für das Endstück mit einer Fadenverdickung versehen ist und so nicht wieder aus dem Bügelvorderteil herausgezogen werden kann, um als endseitige Fadenbefestigung der Glashalterung des Brillengestells zu dienen. Hinter der Eintrittsöffnung ist der Nylonfaden nach vorne über oder in einem Teil des Brillengestells umgelenkt bildet die Glashalterung. Aufgrund der Anordnung der Fadenhalterung auf der Schwenkachse des Brillenbügelscharniers erfährt der Faden bei einer Schwenkbewegung des Brillenbügels keine relative Längung oder Kürzung, wodurch das Bügelvorderteil auf vorteilhaft einfache Art und Weise auch der Glashalterung der Gläser im Brillengestellt dienen kann.

Bei einer weiteren vorteilhaften Ausführungsform der Erfindung ist der Nylonfaden an seinem anderen Ende nach der Umschlingung eines Brillenglases durch eine Ausnehmung im Brillengestellt hindurchgeführt und dahinter ebenfalls mit einer Fadenverdickung versehen, oder aber der Nylonfaden erstreckt sich auch um das andere Brillenglas herum und ist im zweiten Bügelvorderteil festgelegt, sodass mit dem neuen Brillenbügelscharnier insgesamt ein sehr einfaches, leichtes und bei einer Ausführung des Drahtes aus dünnem Titandraht auch ein äußerst strapazierfähiges Brillengestell zur Verfügung gestellt wird.

Nachfolgend sind zwei Ausführungsbeispiele der Erfindung anhand von Zeichnungen näher beschrieben. Es zeigen:

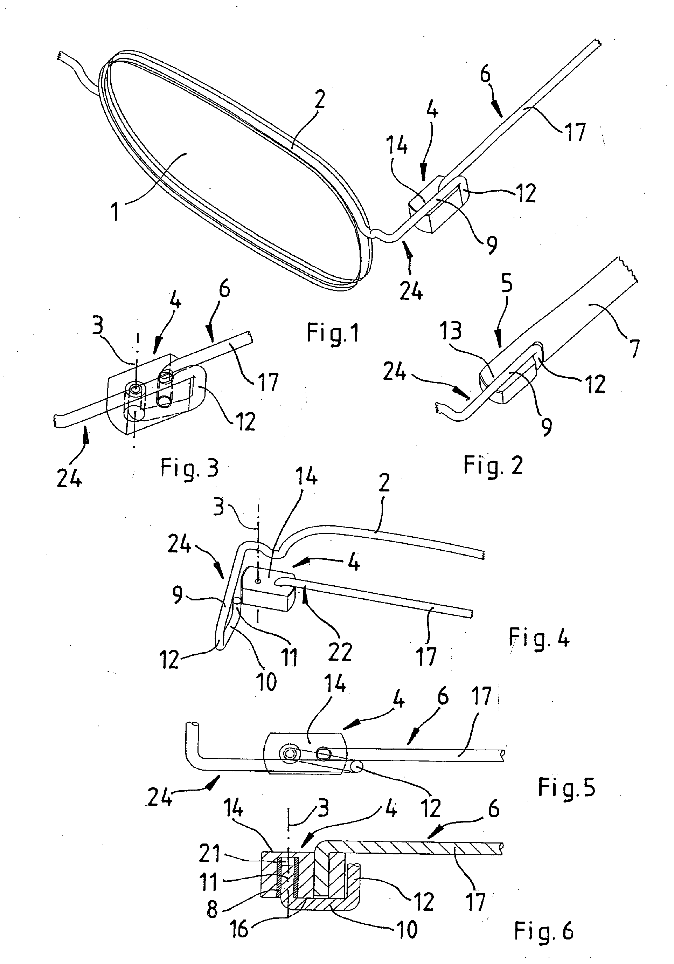

- Fig. 1: eine räumliche Teilansicht mit einem drahtförmigen Brillenbügel,
- Fig. 2: eine backenseitige Teilansicht einer Brille mit massivem Brillenbügel,
- Fig. 3: eine räumliche Teilansicht eines blockförmigen Bügelvorderteils,
- Fig. 4: eine räumliche zerlegte Darstellung eines Brillenbügelscharniers,
- Fig. 5: eine Draufsicht auf ein Brillenbügelscharnier gemäß den Figuren 3, 4,
- Fig. 6: eine geschnittene Seitenansicht des Brillenbügelscharniers gemäß den vorgenannten Figuren 3, 4 und 5,
- Fig. 7: eine räumliche Teilansicht der Brille mit eingeschwenktem Drahtbrillenbügel und im Bügelvorderteil festgelegten Haltefaden einer Glasbefestigung,
- Fig. 8: eine Teilansicht gemäß Figur 7 mit aufgeklapptem Drahtbügel,
- Fig. 9: eine vergrößerte backenseitige Darstellung eines Brillenbügelscharniers mit einem massiven Brillenbügel und einer Fadenhalterung in aufgeklappter Position des Brillenbügels,
- Fig. 10: eine Teilansicht der Figur 9 im zusammengeklappten Zustand des Brillenbügels,
- Fig. 11: eine Draufsicht auf das Brillenbügelscharnier gemäß Figur 8 und
- Fig. 12: eine geschnittene Teilansicht des Brillenbügelscharniers gemäß den Figuren 8 und 11.

Das Brillenbügelscharnier besteht im wesentlichen aus einem als Drahtende ausgebildeten Backenteil 24 eines Brillengestells 2, wobei das Drahtende dreifach rechtwinklig nach innen umgebogen ist und sich zunächst von vorne nach hinten in einer horizontalen Richtung erstreckt, dann hinter einem Bügelvorderteil 4;5 eines Brillenbügels 6;7 rechtwinklig nach unten umgeformt ist und anschließend unter dem Bügelvorderteil 4;5 zurück rechtwinklig nach vorne gebogen ist, wo es noch unterhalb des Bügelvorderteiles 4;5 erneut rechtwinklig nach oben umgeformt ist und dort in eine Ausnehmung 21 im Bügelvorderteil 4;5 eingreift und so die Schwenkachse 3 des Brillenbügels 6;7 erzeugt. In der Ausnehmung 21 für das Endstück 11 des Drahtendes ist eine Buchse 8 vorgesehen, die den spielfreien Sitz des Endstückes 11 im Bügelvorderteil 4;5 auf Dauer gewährleistet.

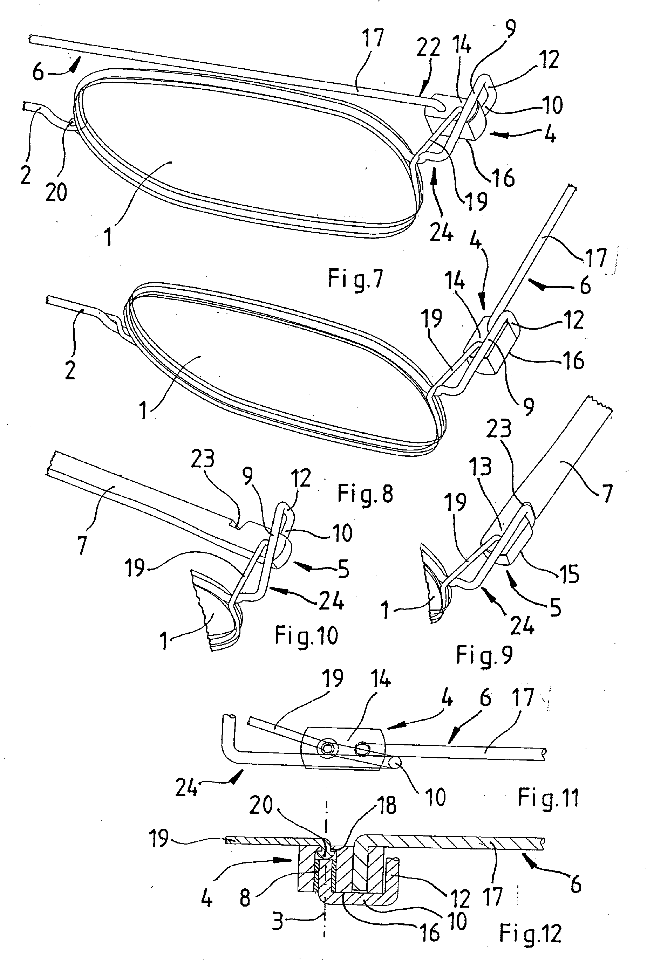

Bei einer Ausführungsform des Brillenbügelscharniers, wie sie in den Figuren 7 bis 12 dargestellt ist, erstreckt sich koaxial zur Schwenkachse 3 eine Eintrittsöffnung 18 in dem Bügelvorderteil 4;5 für einen Nylonfaden 19 der Glashalterung von oben bis in die Ausnehmung 21 hinein, wobei der Nylonfaden 19 an seinem durch die Eintrittsöffnung 18 eingesteckten Ende mit einer Fadenverdickung 20 ausgestattet ist. Um dies zu ermöglichen, ist der erste Abschnitt 9 des Drahtendes seitlich außen neben der Schwenkachse 3 entlang verlaufend angeordnet. Der Nylonfaden 19 erstreckt sich aus dem Bügelvorderteil 4;5 nach vorne und ist über oder in einem Teil des Brillengestells 2 umgelenkt um die Glashalterung zu bilden. Dadurch, dass die Eintrittsöffnung 18 koaxial zur Schwenkachse 3 angeordnet ist, wird sichergestellt, dass beim Verschwenken der Brillenbügel 6;7 keine Änderung der Spannung des Nylonfadens 19 der Glashalterung erfolgt.

Die Bügelvorderteile 4;5 weisen jeweils obere Funktionsflächen 13;14 und untere Funktionsflächen 15;16 auf, auf denen die ersten und zweiten Abschnitte 9;10 des Drahtendes des Backenteils 24 des Brillengestells 2 leicht elastisch vorgespannt aufliegen, wobei diese Spannung in jedem Schwenkzustand der Brillenbügel 6;7 aufrechterhalten bleibt. Zur Montage des Bügelvorderteiles 4;5 auf dem die Schwenkachse 3 bildenden Endstück 11 muss das Drahtende geringfügig elastisch aufgeweitet werden, wodurch die elastischen Haltekräfte erzeugt werden.

Bei einem Brillengestellt wie es in Fig. 7 dargestellt ist, ist der der Glashalterung dienende Nylonfaden 19 im Bügelvorderteil 4 gelagert und erstreckt sich nach vorne, wo er um den Draht eines Brillengestells 2 herum nach unten umgelenkt ist, um nach einer teilweisen Umschlingung des Glases 1 und einem Durchstecken durch eine Öffnung im Draht mit einer Fadenverdickung 20 versehen ist und so das Glas 1 im Brillengestell 2 hält. Denkbar ist jedoch auch eine Version wie sie in Fig. 8 dargestellt ist, bei der der Nylonfaden 19 um das Brillengestell 2 herum von einem Glas 1 zum anderen Glas 1 geführt wird, um mit seinem anderen Ende ebenfalls in einem Bügelvorderteil 4, 5 des zweiten Brillenbügels 6,7 festgelegt zu werden.

Das Bügelvorderteil 4 wird dabei entweder von einem separaten Block gebildet und ist mit ein Brillenbügeldraht 17 versehen, der starr daran angeordnet ist, etwa formschlüssig darin verpresst ist oder das Bügelvorderteil 5 ist einteilig mit dem Brillenbügel 7 ausgeführt, wobei es hier mit einer Nut optisch vom restlichen Brillenbügel abgesetzt ist, deren Nutgrund die Anschlagfläche 23 für das Verbindungsabschnitts 12 des Drahtendes bildet. Eine solche Anschlagfläche 22 wird auch unmittelbar hinter dem Bügelvorderteil 4 vom Brillenbügeldraht 17 zur Verfügung gestellt, wobei diese Anschlagflächen 22;23 einen gegenseitigen Bewegungsanschlag für die Schwenkbewegung des Brillenbügels 6;7 bilden.

## Patentansprüche

1. Brillenbügelscharnier mit einem ortsfesten Backenteil (24) eines Brillengestells (2) und einem um eine ortsfeste Schwenkachse (3) des Backenteils verschwenkbaren Bügelvorderteil (4;5) eines Brillenbügels (6;7), wobei eines der beiden Teile (24;4;5) das andere Teil (4;5;24) mindestens teilweise umgreift, **dadurch gekennzeichnet, dass** das Backenteil (24) ein Drahtende ausweist, mit einem ersten, über einer ersten Funktionsfläche (13; 14) des Bügelvorderteils (4;5) verlaufenden Abschnitt (9) und einem zweiten, über einer zweiten, der ersten Funktionsfläche (13;14) gegenüberliegenden zweiten Funktionsfläche (15;16) des Bügelvorderteils (4;5) verlaufenden Abschnitt (10), sowie ein dagegen abgewinkeltes Endstück (11), welches die Schwenkachse (3) bildet, die in das Bügelvorderteil (4;5) eingreift, welches in einem Zwischenraum zwischen erstem und zweiten Abschnitt (9;10) formschlüssig verschwenkbar gehalten ist.

2. Brillenbügelscharnier nach Anspruch 1, **dadurch gekennzeichnet, dass** der erste Abschnitt (9) und der zweite Abschnitt (10) des Drahtendes durch einen Verbindungsabschnitt (12) miteinander verbunden sind, wobei der erste und der zweite Abschnitt (9;10) des Drahtendes vor Montage des Bügelvorderteils (4;5) einen geringfügig kleineren Zwischenraum bilden, als nach der Montage, und dass das Bügelvorderteil (4;5) zwischen seiner ersten und zweiten Funktionsfläche (13; 14; 15,16) durch elastische Kräfte des Drahtendes zwischen dem ersten Abschnitt (9) und dem zweiten Abschnitt (10) des Drahtendes geklemmt ist.

3. Brillenbügelscharnier nach einem der beiden vorgenannten Ansprüche, **dadurch gekennzeichnet, dass** das Bügelvorderteil (4;5) quaderförmig ausgebildet ist und ein Teil seiner Oberseite die erste Funktionsfläche (13;14) und ein Teil seiner Unterseite die zweite Funktionsfläche (15;16) bildet und dass das Drahtende von vorne nach hinten über die erste Funktionsfläche (13;14) verläuft, hinter dem Bügelvorderteil (4;5) nach unten und unter dem Bügelvorderteil (4;5) wieder nach vorne zurück abgewinkelt ist und unter der zweiten Funktionsfläche (15;16) mit seinem nach oben abgewinkelten Endstück (11) in eine Ausnehmung (21) im Bügelvorderteil (4;5) eingreift.

4. Brillenbügelscharnier nach einem der vorgenannten Ansprüche, **dadurch gekennzeichnet, dass** das Bügelvorderteil (4) von einem separaten Block gebildet ist und ein Brillenbügeldraht (17) starr daran angeordnet ist oder dass das Bügelvorderteil (5) einteilig mit dem Brillenbügel (7) ausgebildet ist.

5. Brillenbügelscharnier nach einem der vorgenannten Ansprüche, **dadurch gekennzeichnet, dass** der Brillenbügeldraht (17) oder ein Bereich hinter dem Bügelvorderteil (5) zusammen mit einer dem Brillenbügeldraht (17) oder dem Bereich zugewandten Anschlagfläche (22;23) des Verbindungsabschnitts (12) des Drahtendes einen gegenseitigen Bewegungsanschlag für die Schwenkbewegung des Brillenbügels (6;7) bildet.

6. Brillenbügelscharnier nach einem der vorgenannten Ansprüche, **dadurch gekennzeichnet, dass** koaxial zur Drehachse der Schwenkachse (3) gegenüber dem abgewinkelten Endstück (11) eine Eintrittsöffnung (18) für einen Nylonfaden (19) einer Glashalterung im Bügelvorderteil (4;5) angeordnet ist und der erste Abschnitt des Drahtendes seitlich außen neben der Schwenkachse (3) entlang verlaufend angeordnet ist.

7. Brillenbügelscharnier nach Anspruch 6, **dadurch gekennzeichnet, dass** ein Nylonfaden (19) hinter der Eintrittsöffnung (18) mit einer Fadenverdickung (20) versehen ist und aus dem Bügelvorderteil (4;5) nach vorne über oder in einem Teil des Brillengestells (2) umgelenkt ist und die Glashalterung bildet.

8. Brillenbügelscharnier nach Anspruch 7, **dadurch gekennzeichnet, dass** der Nylonfaden (19) an seinem anderen Ende durch eine Ausnehmung im Brillengestellt (2) hindurchgeführt und dahinter mit einer Fadenverdickung (20) versehen ist.

9. Brillenbügelscharnier nach Anspruch 1-5, **dadurch gekennzeichnet, dass** die Scharnierbauteile in ihrer Funktion umgekehrt sind und das Drahtende des ortsfesten Backenteils (24) als Brillenbügelvorderteil und ein Brillenbügelvorderteil (4;5) als ortsfestes Backenteil ausgebildet ist.
